# EUROPEAN PATENT APPLICATION

(11) **EP 4 067 313 A1**
(43) Date of publication of application: **05.10.2022**
(21) Application number: 21167402.3
(22) Date of filing: 08.04.2021
(51) Int. Cl.: C02F 1/42

(54) **FULL-FUNCTION AUTOMATIC WATER TREATMENT CONTROL VALVE**

(30) Priority: 31.03.2021 CN 202110351425
(71) Applicant: Nanjing Fobrite Environmental Technology Co., Ltd, Nanjing Jiangsu 211106 (CN)
(72) Inventor: Ma, Xuguang, Jiangsu, 211106 (CN)
(74) Representative: karo IP

(57) **Abstract**

The present invention discloses a full-function automatic water treatment control valve, including a valve body component, a grating assembly, a piston assembly, a driving module, and an ejector assembly. The valve body component includes a piston cavity. A water inlet, a water outlet, and a plurality of water ports are provided on side walls of the piston cavity. The water ports are communicated with the ejector assembly. The piston assembly is mounted in the piston cavity through the grating assembly. The driving module is connected to the piston assembly. The piston assembly includes a main valve piston that can block the water inlet. The main valve piston includes an internal water hole that can communicate the water inlet with the water outlet. The control valve can not only ensure normal operation of a water treatment system, but also has such functions as closing and bypassing, thus eliminating the need to mount additional bypass valves and closing valves. In addition, the control valve can continuously supply water to users via a bypass water path while performing regeneration, and therefore does not affect daily water consumption of the users.

## Description

### BACKGROUND

### Technical Field

The present invention relates to soft water treatment devices, and in particular, to a full-automatic control valve for soft water treatment.

### Related Art

A control valve is a commonly used device in the soft water treatment industry and is widely used in industry and households. During mounting and use, the control valve is often combined with a resin tank and a salt tank to form a water treatment system, and is equipped with a bypass valve and a shut-off valve. When soft water is not needed, a pipeline can be bypassed by opening the bypass valve. When pipeline leakage occurs or the system needs to be turned off, a shut-off valve can be used to close the pipeline. All of the control valves currently on the market do not have closing and bypass functions, and need to be equipped with separate bypass valves and closing valves to be mounted in a water treatment pipeline to achieve the above functions. The use of bypass valves and shut-off valves increases mounting difficulty and device costs and wastes the mounting space.

### SUMMARY

Purpose of invention: The objective of the present invention is to provide a full-function automatic water treatment control valve. The control valve has functions of closing and bypassing, so as to eliminate the trouble of mounting an additional bypass valve and closing valve.

To achieve the foregoing objective, the present invention adopts the following technical solutions.

A full-function automatic water treatment control valve, comprising a valve body component, a grating assembly, a piston assembly, a driving module, and an ejector assembly, wherein the valve body component comprises a piston cavity, a water inlet, a water outlet, and a plurality of water ports are provided on a side wall of the piston cavity, the water ports are communicated with the ejector assembly, the grating assembly is provided for all of the water inlet, the water outlet, and the water ports, the piston assembly is mounted in the piston cavity and is sealingly mated with the grating assembly, the driving module is connected to the piston assembly. The driving module drives the piston assembly to move along the piston cavity to change a communication state between the water inlet, the water outlet, and the water ports. The piston assembly includes a main valve piston, and the main valve piston includes an internal water hole.

When a water treatment system needs to be turned off, the piston assembly is moved so that the main valve piston is sealingly mated with the grating assembly at the water inlet, so as to prevent raw water from entering the valve body component, and when the water treatment system is turned on and does not need to soften the water, the piston assembly is moved so that the main valve piston is located between the water inlet and the water outlet, and the water inlet is communicated with the water outlet through the internal water hole.

Preferably, the piston cavity is divided into a main valve piston cavity and a salt valve piston cavity. The water ports include a water injection port, a sewage drainage port, a central port, a side wall port, an ejector water port, and a salt suction port. The water inlet, the side wall port, the sewage drainage port, the central port, and the water outlet are arranged axially in sequence in the main valve piston cavity, the ejector water port is also arranged in the main valve piston cavity at the same axial position as the water outlet, the central port, the side wall port, and an outlet of the ejector assembly are separately connected to a resin tank, the ejector water port is communicated with a nozzle of the ejector assembly, the water injection port and the salt suction port are arranged axially in sequence in the salt valve piston cavity, the water injection port is connected to a salt tank, and the salt suction port is communicated with a suction port of the ejector assembly.

The grating assembly includes a water inlet grating located at the water inlet, a side wall port grating located at the side wall port, a sewage drainage port grating located at the sewage drainage port, a central port grating located at the central port, a water outlet grating located at the water outlet and the ejector water port, a grating adapter located between the main valve piston cavity and the salt valve piston cavity, a water injection grating located at the water injection port, and a salt suction grating located at the salt suction port.

The main valve piston is mounted in the main valve piston cavity and is sealingly mated with the water inlet grating, the side wall port grating, the sewage drainage port grating, the central port grating, the water outlet grating, and the grating adapter, a water groove is provided on a surface of the main valve piston, a piston section I and a piston section II are formed on two sides of the water groove of the main valve piston, the driving module comprises a piston connecting rod, the piston connecting rod is connected to the piston section I of the main valve piston, the piston assembly further comprises a salt valve piston, the salt valve piston is mounted in the salt valve piston cavity and is connected to the piston section II of the main valve piston, the salt valve piston is sealingly mated with the grating adapter, the water injection grating, and the salt suction grating, a water injection groove and a salt suction groove are provided on a surface of the salt valve piston, diameters of the piston connecting rod and the salt valve piston are both less than a diameter of the main valve piston, so that a water passage I is formed between the piston connecting rod and the main valve piston cavity, and a water passage II is formed between the salt valve piston and the main valve piston cavity, and the internal water hole axially passes through the main valve piston, so as to communicate the water passage I with the water passage II.

Preferably, when the main valve piston is located between the water inlet and the water outlet, and the water inlet is communicated with the water outlet through the internal water hole, the piston section I of the main valve piston is sealingly mated with the side wall port grating, the piston section II of the main valve piston is sealingly mated with the central port grating, and the salt valve piston is sealingly mated with the water injection grating, so as to close the sewage drainage port and the salt suction port.

Preferably, when the water treatment system is turned on and does not need to soften the water, the piston assembly is moved so that the main valve piston is moved to be located between the water inlet and the water outlet, the water inlet is communicated with the water outlet through the water passage I, the internal water hole, and the water passage II. The piston section I of the main valve piston is sealingly mated with the side wall port grating, the piston section II of the main valve piston is sealingly mated with the central port grating, and the salt valve piston is sealingly mated with the water injection grating, so as to close the sewage drainage port and the salt suction port; at this point, the control valve is in a bypass working position in which the raw water is directly discharged to a subsequent pipeline without being softened when passing through the control valve;
when the water treatment system needs to soften the water, the piston assembly is moved so that the central port is communicated with the water outlet through the water groove of the main valve piston, the water inlet is communicated with the side wall port through the water passage I; the piston section I of the main valve piston is sealingly mated with the sewage drainage port grating, and the piston section II of the main valve piston and a portion of the salt valve piston on a left side of the water injection groove are sealingly mated with the grating adapter, and; at this point, the control valve is in a water production working position in which the raw water flows from the water inlet to the control valve, flows through the water inlet grating to a filter media tank via the side wall port, then flows through the central port to the control valve, crosses the water groove of the main valve piston, and flows out from the water outlet;
when the water treatment system needs to inject the water to the salt tank, the piston assembly is moved so that the central port is communicated with the water outlet through the water groove of the main valve piston, the water inlet is communicated with the side wall port through the water passage I, the water passage II is communicated with the water injection port through the water injection groove of the salt valve piston, the piston section I of the main valve piston is sealingly mated with the sewage drainage port grating, and a portion of the salt valve piston between the water injection groove and the salt suction groove is sealingly mated with the salt suction grating, and at this point, the control valve is in a water injection working position in which the raw water flows from the water inlet to the control valve and is divided into two parts, wherein one of the two parts has a flow path the same as that in the water production working position, and the other flows through the internal water hole of the main valve piston, the water passage II, and the water injection port to the salt tank to achieve a water injection function;
when the water treatment system needs to supplement the resin tank with saline water, the piston assembly is moved so that the side wall port is communicated with the sewage drainage port through the water groove of the main valve piston, the salt suction port is communicated with the water injection port through the salt suction groove of the salt valve piston, the water inlet is communicated with the water outlet through the water passage I, the internal water hole, and the water passage II, the piston section II of the main valve piston is sealingly mated with the central port grating, and a portion of the salt valve piston between the water injection groove and the salt suction groove is sealingly mated with the grating adapter, and at this point, the control valve is in a salt suction working position in which the raw water flows from the water inlet to the control valve, flows through the water passage I and the internal water hole of the main valve piston to the water passage II, and then is divided into two parts, where one of the two parts flows out from the water outlet, and the other flows through the ejector water port to the nozzle of the ejector assembly, a negative pressure is formed within the ejector assembly under the action of ejection, the saline water in the salt tank is sucked into the control valve through the water injection port under the action of the negative pressure and then flows through the salt suction port to the suction port of the ejector assembly, the saline water and the raw water are mixed within the ejector assembly and is ejected to the resin tank via the outlet of the ejector assembly, so as to achieve functional regeneration of filter media in the resin tank through the supplementation of the saline water, where waste water generated flows through the side wall port to the control valve, crosses the water groove of the main valve piston, and flows out from the sewage drainage port, and when the control valve is in the salt suction working position, the raw water is allowed to pass through the control valve without being softened and is allowed to be continuously supplied to a user;
when the water treatment system needs to back flush the resin tank, the piston assembly is moved so that the side wall port is communicated with the sewage drainage port through the water groove of the main valve piston, the water inlet is communicated with the water outlet through the water passage I, the internal water hole, and the water passage II, the water passage II is communicated with the central port, and a portion of the salt valve piston between the water injection groove and the salt suction groove is sealingly mated with the grating adapter, and at this point, the control valve is in a back flushing working position in which the raw water flows from the water inlet to the control valve, flows through the water passage I and the internal water hole of the main valve piston to the water passage II, and then is divided into two parts, wherein one of the two parts flows out from the water outlet, and the other flows through the central port to the resin tank and passes through the filter media from bottom to top to remove impurities accumulated in the filter media, wherein the waste water generated flows through the side wall port to the control valve, crosses the water groove of the main valve piston, and flows out from the sewage drainage port; and
when the water treatment system needs to forward flush the resin tank, the piston assembly is moved so that the sewage drainage port is communicated with the central port through the water groove of the main valve piston, the water inlet is communicated with the water outlet through the water passage I, the internal water hole, and the water passage II, the water passage I is communicated with the side wall port, and a portion of the salt valve piston between the water injection groove and the salt suction groove is sealingly mated with the grating adapter, and at this point, the control valve is in a forward flushing working position in which the raw water flows from the water inlet to the control valve and is divided into two parts at the water passage I, wherein one of the two parts flows through the internal water hole of the main valve piston and the water passage II and is discharged through the water outlet, and the other flows through the side wall port to the resin tank and passes through the filter media from top to bottom to compact the filter media, wherein the waste water generated flows through the central port to the control valve, crosses the water groove of the main valve piston, and flows out from the sewage drainage port.

Preferably, the water inlet grating, the side wall port grating, the sewage drainage port grating, the central port grating, the water outlet grating, the grating adapter, the water injection grating, and the salt suction grating are connected as a whole.

Preferably, seal ring slots are provided between the water inlet grating, the side wall port grating, the sewage drainage port grating, the central port grating, the water outlet grating, the grating adapter, the water injection grating, and the salt suction grating, and seal rings are disposed in the seal ring slots, so that sealed mating is formed between an outer circumference of the grating assembly and an inner wall of the piston cavity and between an inner circumference of the grating assembly and an outer circumference of the piston assembly through the seal rings.

Preferably, a cross-sectional dimension of the water groove is greater than cross-sectional dimensions of the water injection groove and the salt suction groove.

Preferably, a cross-sectional dimension of the salt valve piston cavity is less than that of the main valve piston cavity.

Preferably, the main valve piston, the salt valve piston, and the piston connecting rod are threadably and detachably connected.

Preferably, a circular cylindrical channel communicated with an inside of the salt tank is integrally connected on an outer wall of the salt tank, and the circular cylindrical channel is connected to a circular cylindrical water injection port via a circular cylindrical kit, and the kit includes:
a kit body I, an engaging plate, a sandwich piece, a kit body II, a stop port, embedded portions, a hoop, an accommodation port, a movable plate, a stabilizing plate, a guide port, a guide plate, a movable rod, a stop plate, a common worm gear, an umbrella-shaped worm gear, a channel, a beryllium copper material plate, a stop piece, a manual key, a cylindrical member, and a disc spring, wherein the engaging plate is embedded in and assembled to an outer wall of the kit body I, the sandwich piece and the kit body II are fixedly assembled to an outer wall of the engaging plate, the stop port is formed on an outer wall of the kit body II, the guide port is formed on a wall surface of the engaging plate, the guide plate is movably assembled to an inner wall of the guide port, the movable rod is fixedly assembled to an outer wall of the guide plate, the channel is formed on an inner wall of the sandwich piece, the cylindrical member is embedded in and assembled to an inner wall of the channel through transition fit, the stop piece is sleeved on and assembled to an outer wall of the cylindrical member, the embedded portions are embedded in and assembled to an inner wall of the kit body II, the hoop is fixedly assembled to outer walls of the embedded portions, the manual key and the beryllium copper material plate are fixedly assembled to two ends of an outer wall of the stop piece respectively, and the disc spring is fixedly connected to one end of the outer wall of the stop piece; and
the kit body II and the embedded portions form an embedded structure, the embedded portions and the hoop form an embedded structure, and the embedded portions are uniformly distributed about a center of an outer wall of the hoop.

Beneficial effects are as follows: Compared with a conventional control valve, the control valve of the present invention is equipped with a bypass function and a closing function, which can simplify the device mounting pipeline structure, reduce the use of bypass valves and shut-off valves, and reduce device costs and the mounting space. Moreover, the shut-off function is integrated. If the pipeline leaks at home, the shut-off function can be implemented by remotely controlling the control valve, which is safer to use. In addition, when being in the salt suction working position, the control valve can continuously supply water to users via a bypass water path, and therefore does not affect daily water consumption of the users. In addition, since a water mixing valve can be opened during water production, water hardness can be adjusted randomly, which improves use experience of the user. Due to the integrated bypass function, the bypass function can be turned on when the soft water is not needed, which improves utilization efficiency of the water treatment system. The embedded structure of the kit body II and the embedded portions facilitates replacement of the kit, and the circumference diameter of the hoop can be changed efficiently during use. In addition, the embedded structure of the embedded portions and the hoop enhances firmness between the hoop and the embedded portions and prevents breakage during use, and the embedded portions are uniformly distributed about the center of the outer wall of the hoop, which can efficiently perform assembling and use and can also facilitate assembly and disassembly.

### BRIEF DESCRIPTION OF THE DRAWINGS

FIG. 1 is a schematic structural diagram of a control valve according to the present invention.
FIG. 2 is a schematic structural diagram of a valve body component.
FIG. 3 is a schematic structural diagram of a grating assembly.
FIG. 4 is a schematic structural diagram of a piston assembly.
FIG. 5 is a schematic diagram of a state in which the control valve is in a closed position.
FIG. 6 is a schematic diagram of a state in which the control valve is in a bypass position.
FIG. 7 is a schematic diagram of a state in which the control valve is in a water production position.
FIG. 8 is a schematic diagram of a state in which the control valve is in a water injection position.
FIG. 9 is a schematic diagram of a state in which the control valve is in a salt suction position.
FIG. 10 is a schematic diagram of a state in which the control valve is in a back flushing position.
FIG. 11 is a schematic diagram of a state in which the control valve is in a forward flushing position.
FIG. 12 is a three-dimensional schematic diagram of a kit.
FIG. 13 is a three-dimensional schematic cross-sectional view of a kit body I.
FIG. 14 is a three-dimensional schematic diagram of a hoop.
FIG. 15 is a three-dimensional schematic diagram of a movable rod.
FIG. 16 is a schematic diagram of a position X in FIG. 15.
FIG. 17 is a three-dimensional schematic cross-sectional view of a kit body II.
FIG. 18 is a three-dimensional schematic diagram of a kit component.

In the figures: 1-Valve body component; 1-1-Main valve piston cavity; 1-2-Salt valve piston cavity; 1-3-Ejector water port; 1-4-Salt suction port; 1-5-Water passage I; 1-6-Water passage II; 1-7-Piston mating cavity; 1-8-Water inlet; 1-9-Water outlet; 1-10-Water injection port; 1-11-Sewage drainage port; 1-12-Central port; 1-13-Side wall port; 2-Grating assembly; 2-1-Water inlet grating; 2-2-Side wall port grating; 2-3-Sewage drainage port grating; 2-4-Central port grating; 2-5-Water outlet grating; 2-6-Grating adapter; 2-7-Water injection grating; 2-8-Salt suction grating; 2-9-Embedded member; 2-10-Slot; 2-11-Seal ring; 3-Piston assembly; 3-1-Main valve piston; 3-2-Water groove; 3-3-Salt valve piston; 3-4-Internal water hole; 3-5-Water injection groove; 3-6-Salt suction groove; 3-7-Piston section I; 3-8-Piston section II; 4-Driving module; 4-1-Piston connecting rod; 5-Ejector assembly; 6-Resin tank; 7-Salt tank; 7-2: Kit body I; 7-3: Engaging plate; 7-4: Sandwich piece; 7-5: Kit body II; 7-6: Stop port; 7-7: Embedded portion; 7-8: Hoop; 7-812: Accommodation port; 7-813: Movable plate; 7-814: Stabilizing plate; 7-9: Guide port; 7-10: Guide plate; 7-22: Movable rod; 7-2212: Stop plate; 7-2213: Common worm gear; 7-2214: Umbrella-shaped worm gear; 7-23: Channel; 7-24: Beryllium copper material plate; 7-25: Stop piece; 7-26: Manual key; 7-27: Cylindrical member; 7-28: Disc spring.

### DETAILED DESCRIPTION

The following further describes the present invention with reference to accompanying drawings.

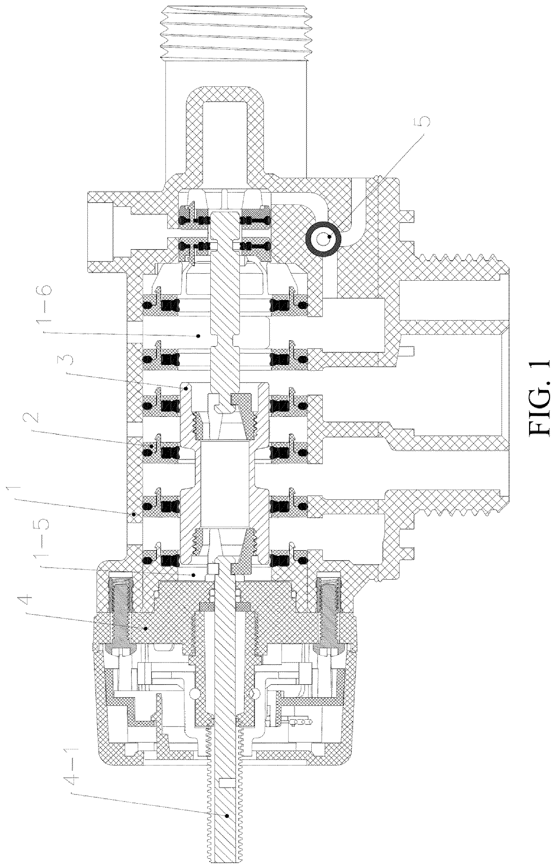

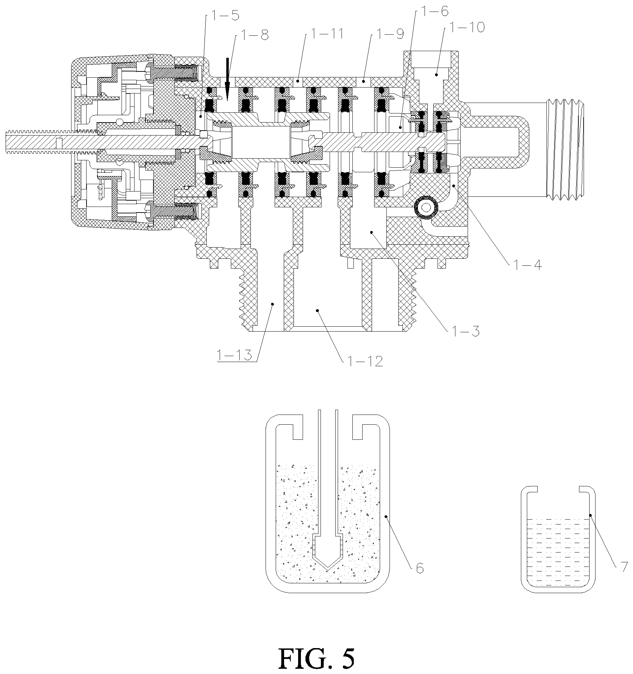

As shown in FIG. 1 and FIG. 5, a full-function automatic water treatment control valve of the present invention is provided. The control valve is used in a water treatment system with a resin tank 6 and a salt tank 7, which includes a valve body component 1, a grating assembly 2, a piston assembly 3, a driving module 4, and an ejector assembly 5. The valve body component 1 may be fixedly mounted on the resin tank 6 through threaded connection or welding. The valve body component 1 includes a piston cavity. A water inlet 1-8, a water outlet 1-9, and a plurality of water ports are provided on side walls of the piston cavity. The water ports are communicated with the ejector assembly 5, the resin tank 6, and the salt tank 7. The grating assembly 2 is provided for all of the water inlet 1-8, the water outlet 1-9, and the water ports, and the piston assembly 3 is mounted to the piston cavity and is sealingly mated with the grating assembly 2. The driving module 4 is connected to the piston assembly 3, and the driving module 4 drives the piston assembly 3 to move along the piston cavity to change a communication state between the water inlet 1-8, the water outlet 1-9, and the water ports. Based on this structure, the driving module 4 is equipped with a remote wireless module, which can remotely control the control valve to perform various functions, including water production, water injection, salt suction, back flushing, forward flushing, and closing and bypass functions.

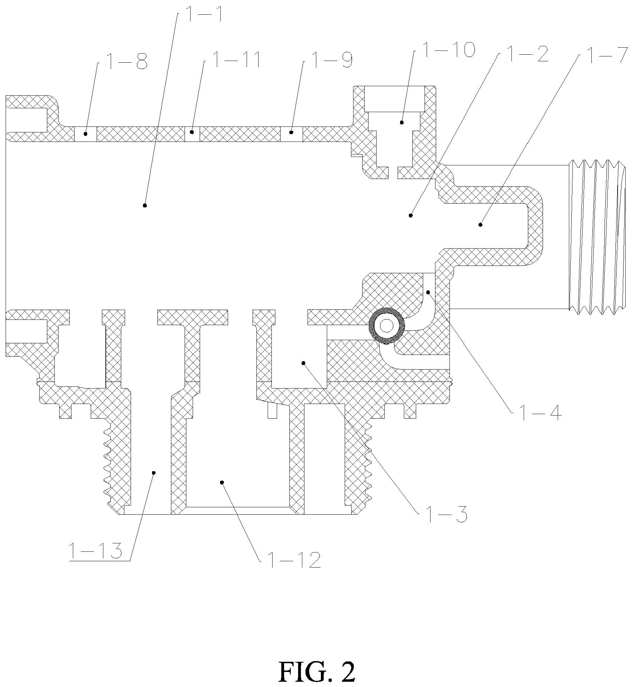

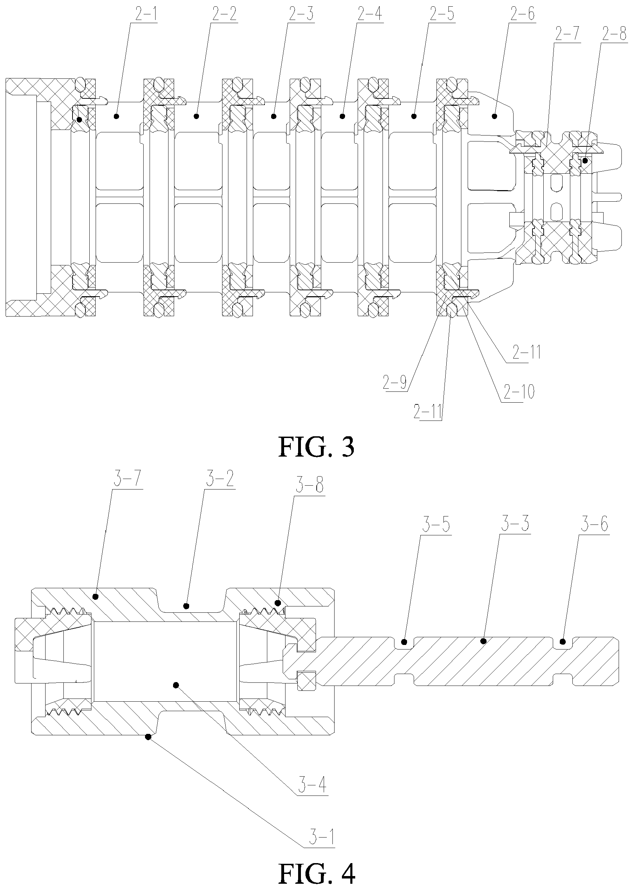

As shown in FIG. 2 and FIG. 4, the piston assembly 3 includes a main valve piston 3-1, and the main valve piston 3-1 includes an internal water hole 3-4.

When the water treatment system needs to be turned off, the piston assembly 3 is moved so that the main valve piston 3-1 is sealingly mated with the grating assembly 2 at a position of the water inlet 1-8, and the water inlet 1-8 is closed, to prevent raw water from flowing into an inside of the valve body component 1. When the water treatment system is turned on and does not need to soften water, the piston assembly 3 is moved so that the main valve piston 3-1 is located between the water inlet 1-8 and the water outlet 1-9 and communicates the water inlet 1-8 with the water outlet 1-9 via the internal water hole 3-4. The water inlet is used to let the water to be treated flow through the water inlet to the valve body, and the water outlet is used to let the treated water flow out from a pipeline from the port. The water hole is circular, and water in a bypass water path communicates the water inlet with the water outlet via the water hole in the piston.

In this embodiment, the piston cavity is divided into a main valve piston cavity 1-1 and a salt valve piston cavity 1-2. The water ports include a water injection port 1-10, a sewage drainage port 1-11, a central port 1-12, a side wall port 1-13, an ejector water port 1-3, and a salt suction port 1-4. The water inlet 1-8, the side wall port 1-13, the sewage drainage port 1-11, the central port 1-12, and the water outlet 1-9 are arranged axially in sequence in the main valve piston cavity 1-1, the ejector water port 1-3 is also arranged in the main valve piston cavity at the same axial position as the water outlet 1-9, the central port 1-12, the side wall port 1-13, and an outlet of the ejector assembly 5 are separately connected to a resin tank 6. The central port 1-12 and an outlet of the ejector assembly 5 are communicated with a central tube inside the resin tank 6. The central tube is inserted into the bottom of the resin tank 6, and the side wall port 1-13 is communicated with a tank port of the resin tank 6. The ejector water port 1-3 is communicated with a nozzle of the ejector assembly 5, the water injection port 1-10 and the salt suction port 1-4 are arranged axially in sequence in the salt valve piston cavity 1-2, the salt suction port 1-4 is communicated with a suction port of the ejector assembly 5, and the water injection port 1-10 is connected to a salt tank 7.

As shown in FIG. 2 to FIG. 4, the grating assembly 2 includes a plurality of single gratings located at the water inlet 1-8, the water outlet 1-9, and the water ports, which includes a water inlet grating 2-1 located at the water inlet 1-8, a side wall port grating 2-2 located at the side wall port 1-13, a sewage drainage port grating 2-3 located at the sewage drainage port 1-11, a central port grating 2-4 located at the central port 1-12, a water outlet grating 2-5 located at the water outlet 1-9 and the ejector water port 1-3, a grating adapter 2-6 between the main valve piston cavity 1-1 and the salt valve piston cavity 1-2, a water injection grating 2-7 located at the water injection port 1-10, and a salt suction grating 2-8 located at the salt suction port 1-4. An outer circumference of each of the single gratings is sealingly mated with inner wall of the main valve piston cavity 1-1 and the salt valve piston cavity 1-2 by a seal, and the outer circumference is sealingly mated with an outer circumference of the piston assembly 3 by the seal.

The above single gratings may be detachably connected as a whole through a hook structure, or fixedly connected as a whole through welding, which facilitates overall disassembly and assembly in the piston cavity. In this embodiment, an embedded member 2-9 and a slot 2-10 are provided on a side surface of each of the single gratings, and the above single gratings are connected in series through mating of the embedded members 2-9 and the slots 2-10.

A seal groove is formed between the embedded members 2-9 and the slots 2-10 of two adjacent single gratings, and a seal ring 2-11 is arranged in the seal groove. The seal ring 2-11 is tightened and fixed through the mating of the embedded members 2-9 and the slots 2-10, and sealed mating is formed between an outer circumference of the grating assembly 2 and an inner wall of the piston cavity and between an inner circumference of the grating assembly 2 and the outer circumference of the piston assembly 3 through the seal ring 2-11.

As shown in FIG. 1 and FIG. 4, the main valve piston 3-1 is mounted in the main valve piston cavity 1-1 and is sealingly mated with the water inlet grating 2-1, the side wall port grating 2-2, the sewage drainage port grating 2-3, the central port grating 2-4, the water outlet grating 2-5, and the second half section of the grating adapter 2-6. A water groove 3-2 is provided on a surface of the main valve piston 3-1, and a piston section I 3-7 and a piston section II 3-8 are formed on two sides of the water groove 3-2 of the main valve piston 3-1. The driving module 4 includes a piston connecting rod 4-1, and the piston connecting rod 4-1 is connected to the piston section 13-7 of the main valve piston 3-1. The piston assembly 3 further includes a salt valve piston 3-3, and the salt valve piston 3-3 is mounted in the salt valve piston cavity 1-2 and is connected to the piston section II 3-8 of the main valve piston 3-1. The salt valve piston 3-3 is sealingly mated with the first half section of the grating adapter 2-6, the water injection grating 2-7, and the salt suction grating 2-8. A water injection groove 3-5 and a salt suction groove 3-6 are provided on a surface of the salt valve piston 3-3, and diameters of the piston connecting rod 4-1 and the salt valve piston 3-3 are both less than a diameter of the main valve piston 3-1, so that a water passage I 1-5 is formed between the piston connecting rod 4-1 and the main valve piston cavity 1-1, a water passage II 1-6 is formed between the salt valve piston 3-3 and the main valve piston cavity 1-1, and the internal water hole 3-4 axially passes through the main valve piston, so as to communicate the water passage I 1-5 with the water passage II 1-6. The water passage I1-5 and the water passage II 1-6 changes as the piston assembly 3 moves.

In order to fit the piston assembly 3, a piston mating cavity 1-7 is provided at an end of the salt valve piston cavity 1-2, and the piston mating cavity 1-7 can accommodate the salt valve piston 3-3. The main valve piston cavity 1-1, the piston connecting rod 3-2, and the salt valve piston 3-3 are threadably and detachably connected, which facilitates mounting and disassembly of the piston assembly 3 and the driving module 4.

In this embodiment, according to different requirements of different working positions for water flow, the water injection port 1-10 and the salt suction port 1-4 with small water flow are arranged in the salt valve piston cavity 1-2, and the water inlet 1-8, the side wall port 1-13, the sewage drainage port 1-11, the central port 1-12, and the water outlet 1-9 with large water flow are arranged in the main valve piston cavity 1-1. A cross-sectional dimension of the water groove 3-2 is greater than cross-sectional dimensions of the water injection groove 3-5 and the salt suction groove 3-6. When the control valve is in a water production working position, a forward flushing working position, and a back flushing working position, the water flow only passes through the main valve piston cavity 1-1 and the water flow is large. When the control valve is in a salt suction working position and a water injection working position, the water flow only passes through the salt valve piston cavity 1-2 and the water flow is small.

In order to prevent the dimension of the grating assembly between the salt valve piston 3-3 and the salt valve piston cavity 1-2 from being too large and to ensure stability and sealing performance of the piston assembly 3 during the movement, correspondingly, the cross-sectional dimension of the salt valve piston cavity 1-2 is less than that of the main valve piston cavity 1-1.

As shown in FIG. 5 to FIG. 11, the full-function automatic water treatment control valve can respectively implement the functions of closing, bypassing, water production, water injection, salt suction, back flushing, and forward flushing. The arrow in the figure shows a direction of the water flow. The specific working process of the control valve is as follows.

As shown in FIG. 5, when the water treatment system needs to be turned off, the piston assembly 3 is moved so that the main valve piston 3-1 is located at the position of the water inlet 1-8, and the piston section I 3-7 of the main valve piston 3-1 is sealingly mated with the water inlet grating 2-1. At this point, the control valve is in the closed working position, which can prevent raw water from entering the valve body component 1. In addition, the water groove 3-2 of the main valve piston 3-1 communicates the side wall port 1-13 with the sewage drainage port 1-11, and the water passage II 1-6 communicates the central port 1-12 with the water outlet 1-9. When the water treatment system is turned off, when a pipeline behind the control valve leaks, the water accumulated in the pipeline enters the control valve from the water outlet 1-9, and then passes through the resin tank 6 and flows into a sewage pipeline from the sewage drainage port 1-11, which can reduce water leakage at a leakage point and reduce property loss caused by the leakage. When the leakage occurs inside the control valve, by closing the water inlets 1-8, the leakage point can be cut off, so that the property loss caused by the leakage of the control valve can be reduced.

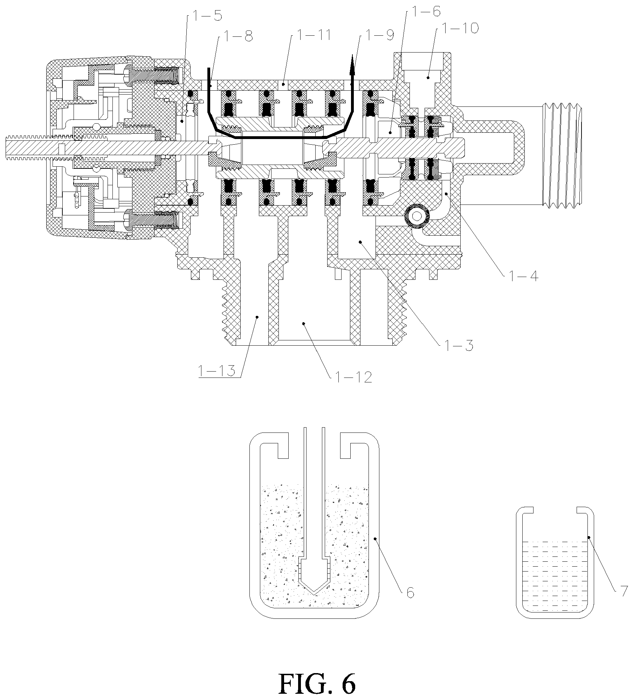

As shown in FIG. 6, when the water treatment system is turned on and does not need to soften water, the piston assembly 3 is moved so that the main valve piston is located between the water inlet 1-8 and the water outlet 1-9, and the water inlet 1-8 is communicated with the water outlet 1-9 through the water passage I 1-5, the internal water hole 3-4, and the water passage II 1-6. The piston section I 3-7 of the main valve piston 3-1 is sealingly mated with the side wall port grating 2-2, the piston section II 3-8 of the main valve piston 3-1 is sealingly mated with the central port grating 2-4, and the salt valve piston 3-3 is sealingly mated with the water injection grating 2-7, so as to close the sewage drainage port 1-11 and the salt suction port 1-4. At this point, the control valve is in a bypass working position in which the raw water is directly discharged to a subsequent pipeline without being softened when passing through the control valve.

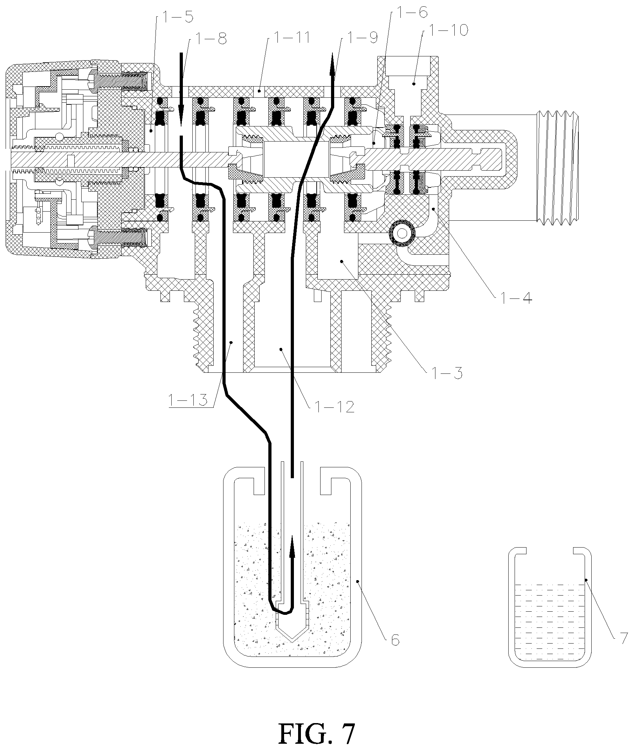

As shown in FIG. 7, when the water treatment system needs to soften the water, the piston assembly 3 is moved so that the central port 1-12 is communicated with the water outlet 1-9 through the water groove 3-2 of the main valve piston 3-1, and the water inlet 1-8 is communicated with the side wall port 1-13 through the water passage I 1-5. The piston section I 3-7 of the main valve piston 3-1 is sealingly mated with the sewage drainage port grating 2-3, and the piston section II 3-8 of the main valve piston 3-1 and a portion of the salt valve piston 3-3 on a left side of the water injection groove 3-5 are sealingly mated with the grating adapter 2-6. At this point, the control valve is in a water production working position in which the raw water flows from the water inlet 1-8 to the control valve, flows through the water inlet grating 2-1 to a filter media tank 6 via the side wall port 1-13, then flows through the central port 1-12 to the control valve, crosses the water groove 3-2 of the main valve piston 3-1, and flows out from the water outlet 1-9.

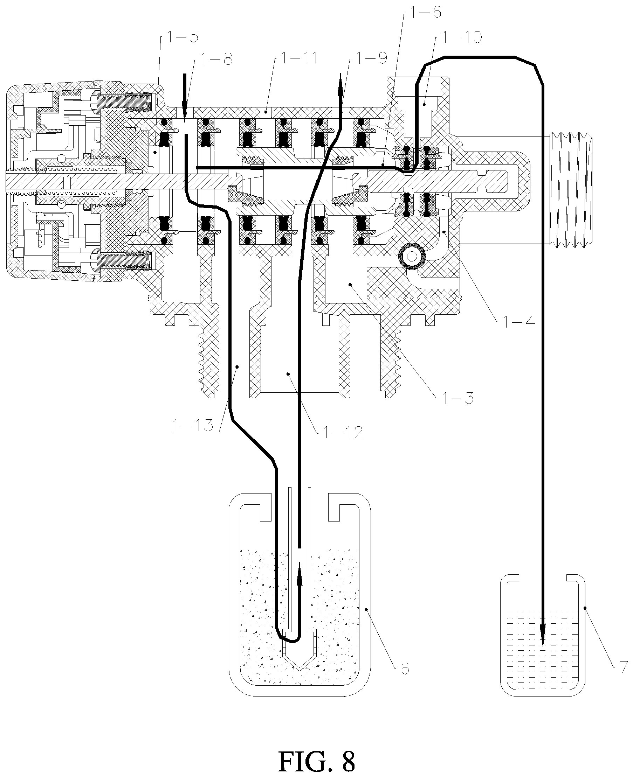

As shown in FIG. 8, when the water treatment system needs to inject the water to the salt tank, the piston assembly 3 is moved so that the central port 1-12 is communicated with the water outlet 1-9 through the water groove 3-2 of the main valve piston, the water inlet 1-8 is communicated with the side wall port 1-13 through the water passage I 1-5, and the water passage II 1-6 is communicated with the water injection port 1-10 through the water injection groove 3-5 of the salt valve piston. The piston section I 3-7 of the main valve piston 3-1 is sealingly mated with the sewage drainage port grating 2-3, and a portion of the salt valve piston 3-3 between the water injection groove 3-5 and the salt suction groove 3-6 is sealingly mated with the salt suction grating 2-8. At this point, the control valve is in a water injection working position in which the raw water flows from the water inlet 1-9 to the control valve and is divided into two parts, one of the two parts has a flow path the same as that in the water production working position, and the other flows through the internal water hole 3-4 of the main valve piston 3-1, the water passage II 1-6, and the water injection port 1-10 to the salt tank 7 to achieve a water injection function.

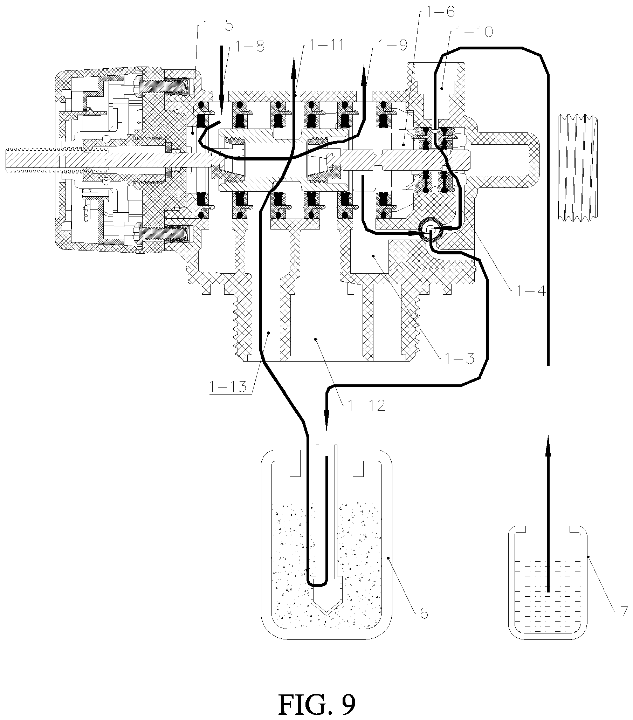

As shown in FIG. 9, when the water treatment system needs to supplement the resin tank 6 with saline water, the piston assembly 3 is moved so that the side wall port 1-13 is communicated with the sewage drainage port 1-11 through the water groove 3-2 of the main valve piston 3-1, the salt suction port 1-4 is communicated with the water injection port 1-10 through the salt suction groove 3-6 of the salt valve piston 3-3, and the water inlet 1-8 is communicated with the water outlet 1-9 through the water passage I 1-5, the internal water hole 3-4, and the water passage II 1-6. The piston section II 3-8 of the main valve piston 3-1 is sealingly mated with the central port grating 2-4. A portion of the salt valve piston 3-3 between the water injection groove 3-5 and the salt suction groove 3-6 is sealingly mated with the grating adapter 2-6. At this point, the control valve is in a salt suction working position in which after the raw water flows from the water inlet 1-8 to the control valve, flows through the water passage I 1-5 and the internal water hole 3-4 of the main valve piston 3-1 to the water passage II 1-6 and then is divided into two parts. One of the two parts flows out from the water outlet 1-9, and the other flows through the ejector water port 1-3 to the nozzle of the ejector assembly 5. A negative pressure is formed within the ejector assembly 5 under the action of ejection, and the saline water in the salt tank 7 is sucked into the control valve through the water injection port 1-10 under the action of negative pressure and then flows through the salt suction port 1-4 to the suction port of the ejector assembly 5. The saline water and the raw water are mixed within the ejector assembly 5 and is ejected to the resin tank 6 via the outlet of the ejector assembly 5, so as to achieve functional regeneration of filter media in the resin tank 6 through the supplementation of the saline water. Waste water generated flows through the side wall port 1-13 to the control valve, crosses the water groove 3-2 of the main valve piston 3-1, and flows out from the sewage drainage port 1-11. In addition, when the control valve is in the salt suction working position, the raw water is allowed to pass through the control valve without being softened and is allowed to be continuously supplied to users, which does not affect daily water consumption of the user.

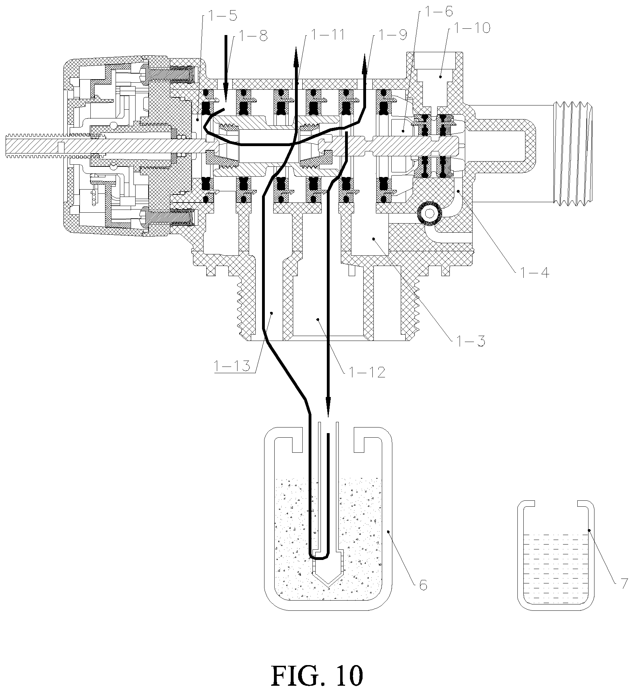

As shown in FIG. 10, when the water treatment system needs to back flush the resin tank, the piston assembly 3 is moved so that the side wall port 1-13 is communicated with the sewage drainage port 1-11 through the water groove 3-2 of the main valve piston, the water inlet 1-8 is communicated with the water outlet 1-9 through the water passage I 1-5, the internal water hole 3-4, and the water passage II 1-6, and the water passage II 1-6 is communicated with the central port 1-12. A portion of the salt valve piston 3-3 between the water injection groove 3-5 and the salt suction groove 3-6 is sealingly mated with the grating adapter 2-6. At this point, the control valve is in the back flushing working position in which the raw water flows from the water inlet 1-8 to the control valve, flows through the water passage I 1-5 and the internal water hole 3-4 of the main valve piston 3-1 to the water passage II 1-6, and then is divided into two parts. One of the two parts flows out from the water outlet 1-9, and the other flows through the central port 1-12 to the resin tank 6 and passes through the filter media from bottom to top to remove impurities accumulated in the filter media. The waste water generated flows through the side wall port 1-13 to the control valve, crosses the water groove 3-2 of the main valve piston 3-1, and flows out from the sewage drainage port 1-11.

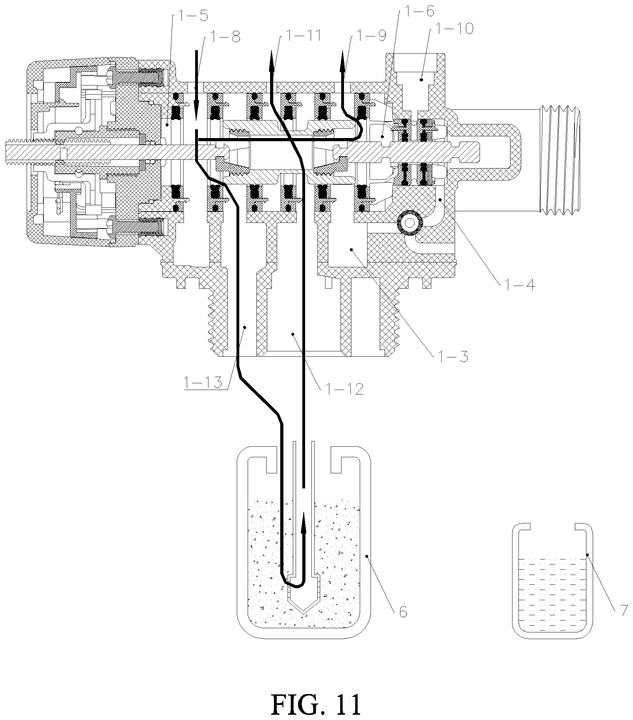

As shown in FIG. 11, when the water treatment system needs to forward flush the resin tank, the piston assembly 3 is moved so that the sewage drainage port 1-11 is communicated with the central port 1-12 through the water groove 3-2 of the main valve piston, the water inlet 1-8 is communicated with the water outlet 1-9 through the water passage I 1-5, the internal water hole 3-4, and the water passage II 1-6, and the water passage I 1-5 is communicated with the side wall port 1-13. A portion of the salt valve piston 3-3 between the water injection groove 3-5 and the salt suction groove 3-6 is sealingly mated with the grating adapter 2-6. At this point, the control valve is in a forward flushing working position in which the raw water flows from the water inlet 1-8 to the control valve and is divided into two parts at the water passage I 1-5. One of the two parts flows through the internal water hole 3-4 of the main valve piston 3-1 and the water passage II 1-6 and is discharged through the water outlet 1-9, and the other flows through the side wall port 1-13 to the resin tank 6 and passes through the filter media from top to bottom to compact the filter media. The waste water generated flows through the central port 1-12 to the control valve, crosses the water groove 3-2 of the main valve piston 3-1, and flows out from the sewage drainage port 1-11.

According to the present invention, the valve of a water mixing port is opened during water production, so that unsoftened water can be mixed in the treated softened water, and hardness of the water is adjusted to a hardness value range required by the user. When users do not need to use soft water for life, such as watering flowers and flushing cars, the control valve can be switched to the bypass position, which improves use efficiency of the soft water system. In addition, since the control valve is integrated with the water mixing function during water production, in some cases where water with a certain degree of hardness is required, the water mixing valve can be opened to adjust the water hardness to the water hardness required by the user.

A general structure of the water injection port 1-10 connected to the salt tank 7 is: A circular cylindrical channel communicated with an inside of the salt tank 7 is integrally connected on an outer wall of the salt tank 7, and the circular cylindrical channel is connected to a circular cylindrical water injection port 1-10 via a circular cylindrical kit. The current kit is composed of two sides, which are each connected to the water injection port and the channel. However, during the operation of such a kit, the kit of a type of architecture often fails to meet application requirements. For example, since there is a center distance between the water injection port and the channel during use, it is necessary to use a kit that can form a center distance. The center distance is a distance between a center line of the water injection port and a center line of the channel. However, since it cannot be ensured that the center distance between the water injection port and the channel is in a set interval during use of the kit, the channel is often damaged. In addition, during the assembly of the kit, since the kit is connected to the outer wall of the water injection port or the outer wall of the channel to perform assembly, and a position at which the kit is located needs to be changed back and forth during assembly, which is not easy during assembly and often causes damage to the channel.

With such defects, it is urgent to implement new improvements in the current state of the kit architecture.

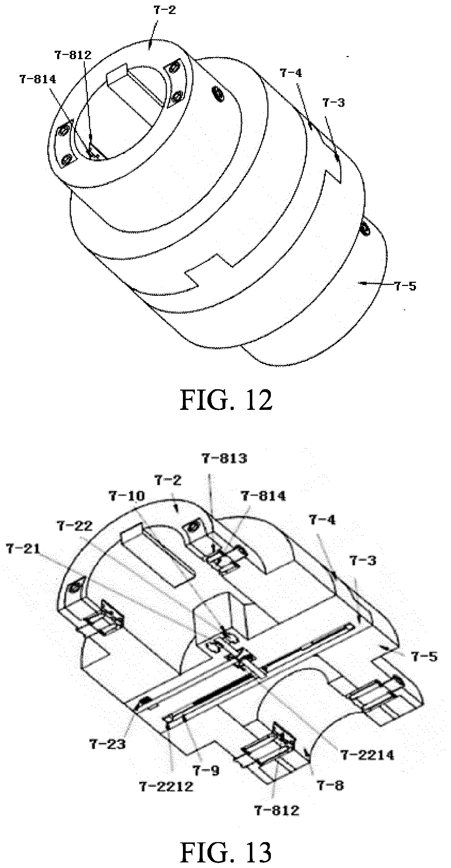

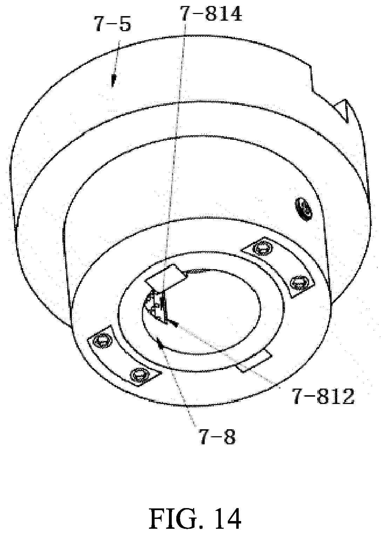

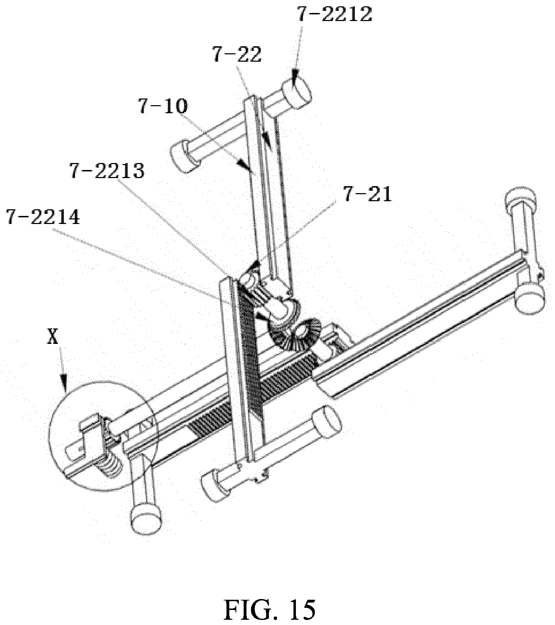

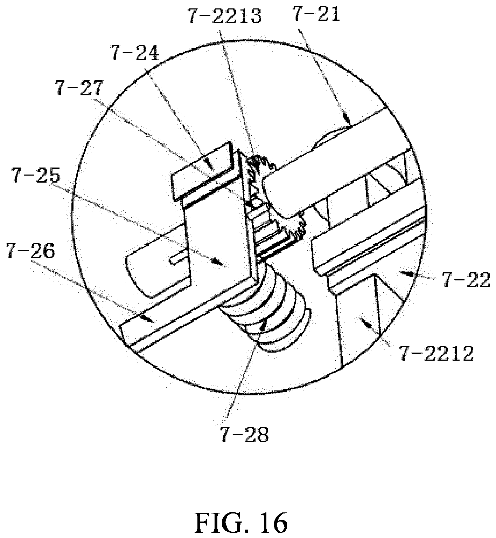

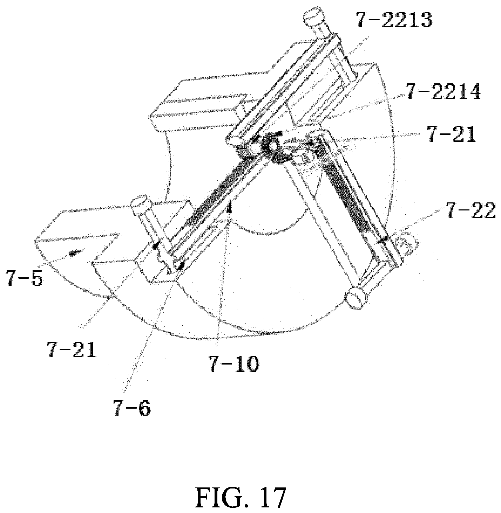

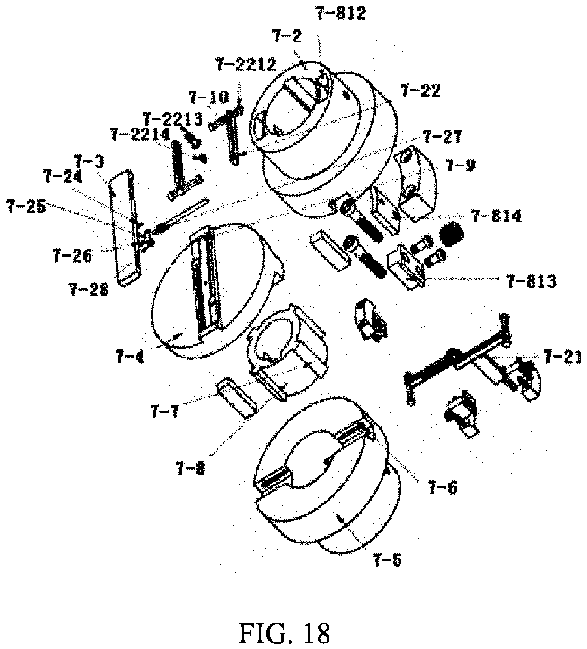

Through improvements, as shown in FIG. 12 to FIG. 18, a circular cylindrical channel communicated with an inside of the salt tank 7 is integrally connected on an outer wall of the salt tank 7, and the circular cylindrical channel is connected to a circular cylindrical water injection port 1-10 via a circular cylindrical kit. The kit includes:
a circular cylindrical kit body I 7-2, an engaging plate 7-3, a sandwich piece 7-4, a circular cylindrical kit body II 7-5, a stop port 7-6, strip embedded portions 7-7, a hoop 7-8, an accommodation port 7-812, a movable plate 7-813, a stabilizing plate 7-814, a guide port 7-9, a guide plate 7-10, a movable rod 7-22, a stop plate 7-2212, a common worm gear 7-2213, an umbrella-shaped worm gear 7-2214, a channel 7-23, a beryllium copper material plate 7-24, a stop piece 7-25, a manual key 7-26, a cylindrical member 7-27, and a disc spring 7-28. The engaging plate 7-3 is embedded in and assembled to an outer wall of the kit body I 7-2, the sandwich piece 7-4 and the kit body II 7-5 are fixedly assembled to an outer wall of the engaging plate 7-3, the stop port 7-6 is formed on an outer wall of the kit body II 7-5, the guide port 7-9 is formed on a wall surface of the engaging plate 7-3, the guide plate 7-10 is movably assembled to an inner wall of the guide port 7-9, the movable rod 7-22 is fixedly assembled to an outer wall of the guide plate 7-10, the channel 7-23 is formed on an inner wall of the sandwich piece 7-4, the cylindrical member 7-27 is embedded in and assembled to an inner wall of the channel 7-23 through transition fit, the stop piece 7-25 is sleeved on and assembled to an outer wall of the cylindrical member 7-27, the embedded portions 7-7 are embedded in and assembled to an inner wall of the kit body II 7-5, the hoop 7-8 is fixedly assembled to outer walls of the embedded portions 7-7, the manual key 7-26 and the beryllium copper material plate 7-24 are fixedly assembled to two ends of an outer wall of the stop piece 7-25 respectively, and the disc spring 7-28 is fixedly connected to one end of the outer wall of the stop piece 7-25. The engaging plate 7-3 has holes passing through left and right. A gap between the kit body I and the water injection port when connected is filled with a seal ring, and a gap between the kit body II and the channel when connected is filled with a seal ring.

The kit body II 7-5 and the embedded portions 7-7 form an embedded structure. The embedded portions 7-7 and the hoop 7-8 form an embedded structure. The embedded portions 7-7 are uniformly distributed around the center of the outer wall of the hoop 7-8. The embedded structure of the kit body II 7-5 and the embedded portions 7-7 facilitates replacement of the kit, and the circumference diameter of the hoop 7-8 can be changed efficiently during use. In addition, the embedded structure of the embedded portions 7-7 and the hoop 7-8 enhances firmness between the hoop 7-8 and the embedded portions 7-7 and prevents breakage during use, and the embedded portions 7-7 are uniformly distributed around the center of the outer wall of the hoop 7-8, which can efficiently perform assembly and use and can also facilitate assembly and disassembly.

The accommodation port 7-812 is formed on the inner wall of the hoop 7-8. A movable plate 7-813 is movably assembled to an inner wall of the accommodation port 7-812. The stabilizing plate 7-814 is threadably fixed to an outer wall of the movable plate 7-813. The assembled movable plate 7-813 facilitates movement and restoration during use, which can prevent embedding. In addition, the assembled stabilizing plate 7-814 facilitates implementation of firm embedding of the channel, reduces a region connected to the outer wall of the channel, and improves the effect of stabilizing the channel.

The hoop 7-8 and the movable plate 7-813 form a movable structure through the accommodation port 7-812, and the movable plate 7-813 and the stabilizing plate 7-814 form a threadably connected structure. A contour of the outer wall of the stabilizing plate 7-814 is a ring-shaped protruding structure. In addition, an outer diameter of the stabilizing plate 7-814 is less than an inner diameter of the hoop 7-8. The movable structure of the hoop 7-8 and the movable plate 7-813 can prevent the movable plate 7-813 from being squeezed or embedded during operation. In addition, the threaded structure of the movable plate 7-813 and the stabilizing plate 7-814 facilitates replacement of the stabilizing plate 7-814 after use. In addition, the contour of the stabilizing plate 7-814 is a ring-shaped protruding structure, which reduces a region connected to the outer wall of the channel, and improves the effect of stabilizing the channel. In addition, the outer diameter of the stabilizing plate 7-814 is less than the inner diameter of the hoop 7-8, so that the stabilizing plate 7-814 forms a large amount of strain during use to stabilize the channel.

The guide plate 7-10 forms a movable structure with the engaging plate 7-3 via the guide port 7-9, and the guide plate 7-10 and the movable rod 7-22 form an embedded structure. A shape of an outer wall of the movable rod 7-22 is a worm gear structure. Two movable rods 7-22 are symmetrically provided relative to the center of the engaging plate 7-3. The movable structure of the guide plate 7-10 and the engaging plate 7-3 facilitates changing of the operating position of an apparatus. In addition, the embedded structure of the guide plate 7-10 and the movable rod 7-22 prevents breakage between the guide plate 7-10 and the movable rod 7-22 during use, so as to prevent the incapability of disassembling after embedding. The shape of an outer wall of the movable rod 7-22 is the worm gear structure, which can perform unmistakable movement in a certain interval. In addition, two movable rods 7-22 are arranged symmetrically with respect to the center of the engaging plate 7-3, which can synchronously move in two directions to form a movement interval for the kit movement.

The stop plate 7-2212 is fixedly assembled to the outer wall of the movable rod 7-22, and a common worm gear 7-2213 is assembled to the outer wall of the movable rod 7-22 through occlusion. The water injection port is assembled to the inner wall of the common worm gear 7-2213 through transition fit. An umbrella-shaped worm gear 7-2214 is fixedly assembled to one end of the outer wall of the water injection port. Such an assembled kit facilitates efficient changing of a movement place of the kit during use, and also has an architecture that moves from one place to a different place to form an architecture with synchronized movements to execute applications.

The stop plate 7-2212 and the movable rod 7-22 form an embedded structure, and the shape of the outer wall of the stop plate 7-2212 is a rod-shaped structure. The stop plate 7-2212 passes through the stop port 7-6 and forms a movable structure with the kit body I 7-2 and the kit body II 7-5. The embedded structure of the stop plate 7-2212 and the movable rod 7-22 can prevent breakage between the stop plate 7-2212 and the movable rod 7-22. The outer wall of the stop plate 7-2212 is rod-shaped, which facilitates the movement of the stop plate 7-2212 during use, and can also perform easy assembly. In addition, the movable structure of the stop plate 7-2212 with the kit body I 7-2 and the kit body II 7-5 can form a center distance. Displacement of the center distance can prevent an excessive torque that occurs under external shock conditions from causing additional damage to the water injection port or the channel.

The common worm gear 7-2213 and the movable rod 7-22 form an occlusion structure. In addition, the outer wall of the common worm gear 7-2213 forms an integral structure through the water injection port and the outer wall of the umbrella-shaped worm gear 7-2214. In addition, three umbrella-shaped worm gears 7-2214 are provided symmetrically with respect to the center of the water injection port. The occlusion structure of the common worm gear 7-2213 and the movable rod 7-22 can perform correct movement and also can facilitate operating of an operator. In addition, the overall structure of the outer wall of the common worm gear 7-2213 with the outer wall of the umbrella-shaped worm gear 7-2214 through the water injection port is integrally formed to facilitate synchronous movement and prevent slipping. Three umbrella-shaped worm gears 7-2214 are symmetrically provided with respect to the center of the water injection port. The other two umbrella-shaped worm gears 7-2214 can be pulled by means of rotation of one umbrella-shaped worm gear 7-2214 to perform rotation.

The stop piece 7-25 forms a rotating structure with the sandwich piece 7-4 through the channel 7-23 and the cylindrical member 7-27. The stop piece 7-25 and the sandwich piece 7-4 form a telescopic structure through the disc spring 7-28. The stop piece 7-25 and the beryllium copper material plate 7-24 form an embedded structure with the manual key 7-26, and the stop piece 7-25 and the common worm gear 7-2213 form an occlusion structure. The rotating structure of the stop piece 7-25 and the sandwich piece 7-4 facilitates manual rotation of the stop piece 7-25 manually, and the rotation of the stop piece 7-25 is performed by the rotation of the common worm gear 7-2213. In addition, the telescopic structure of the stop piece 7-25 and the sandwich piece 7-4 can perform active embedding and fixed connection to prevent constant place from being skewed. In addition, the embedded structure of the stop piece 7-25 and the beryllium copper material plate 7-24 with the manual key 7-26 can perform information transmission to a controller externally connected to the beryllium copper material plate through the connection of the beryllium copper material plate 7-24. The occlusion structure of the stop piece 7-25 and the common worm gear 7-2213 can perform embedding and fixed connection to prevent the displacement caused by separation.

In this way, during use of the kit that facilitates the execution of the stop position in the variable interval, the kit is initially put at a place where the connection is to be executed. According to the needs of the application during use, through the embedding and connection of the embedded portions 7-7 and the kit body II 7-5, a suitable hoop 7-8 is fixedly connected to the inner wall of the kit body II 7-5. A transparent structure is provided on the outer wall of the channel, the accommodation port 7-812 formed through the hoop 7-8 facilitates the movable plate 7-813 that is movably assembled, and the stabilizing plate 7-814 that is threadably assembled to the movable plate 7-813 is pressed on the channel for stability. The contour of outer wall of the stabilizing plate 7-814 is a ring-shaped protruding structure, which reduces a region connected to the outer wall of the channel and improves the effect of stabilizing the channel. Then the kit body I 7-2 is assembled to one end of the outer wall of the water injection port, and the stop plate 7-2212, the common worm gear 7-2213, the umbrella-shaped worm gear 7-2214, the guide plate 7-10, and the water injection port in the movable rod 7-22 through the guide port 7-9 formed in the engaging plate 7-3 form a device for changing the center distance. The three umbrella-shaped worm gears 7-2214 engaged with each other are pulled through the water injection port to perform rotation, and the umbrella-shaped worm gear 7-2214 pulls the common worm gear 7-2213 to rotate and synchronously causes the stop plate 7-2212 pulling assembling of the movable rod 7-22 to move in the stop port 7-6. The guide plate 7-10 assembled to the movable rod 7-22 performs movement and stopping in the guide port 7-9 to prevent the embedding and form a stable state after the movement. Through embedding and connection of the stop piece 7-25 assembled to the channel 7-23 formed via the sandwich piece 7-4 and the common worm gear 7-2213 and the elasticity of the disc spring 7-28, stabilization is performed through the rotation of the cylindrical member 7-27 to prevent disengagement and rotation. In the event of disengagement, the beryllium copper material plate 7-24 of the connecting stop piece 7-25 is connected to another beryllium copper material plate 7-24, and information is sent out for notification. The performance of the kit is diversified during use, and when not in use, the manual key 7-26 assembled via the stop piece 7-25 releases the stop kit, which improves the overall functionality.

The guide plate and the stop plate are provided on the kit, which facilitates changing of a suitable interval of changing a center distance during use, and prevents damage to the water injection port or the channel due to the connection of the kit during use. The hoop is provided to facilitate reduction of the radius of the channel for changing. In addition, the stabilizing plate assembled to the kit can stabilize the channel and prevent slipping.

The hoop that can perform changes is provided. The embedded portions assembled via the outer wall of the hoop are convenient to be assembled inside the kit. In addition, the inner wall of the hoop and the inner wall of the kit both have the accommodation port. The movable plate can be movably assembled to the inner wall of the accommodation port, and the stabilizing plate with stable performance is fixedly assembled to the outer wall of the movable plate. In addition, the outer wall of the stabilizing plate has a ring-shaped protruding structure, and the inner diameter of the stabilizing plate is less than the outer diameter of the channel, which facilitates the compression and fixed connection of the channel and can also reduce the damage to the channel. The sandwich piece that can restrain a size of a center distance and an engaging plate assembled to the outer wall of the sandwich piece are provided. A common worm gear that can perform active changing and rotation is assembled inside the engaging plate, and the guide plate, the movable rod, and the stop plate assembled in the engaging plate is changed through the rotation of the common worm gear, and the stop plate is used in combination with the stop port, which facilitates constraint on the size of the center distance. In addition, the channel is provided on one end of the sandwich piece, and the stop piece assembled in the channel is used in combination with the common worm gear, which facilitates stabilization after the constraint on the size. In addition, the stop piece is embedded in the common worm gear through the expansion and contraction of the disc spring. At the same time, when the manual change is required, stopping is performed through the manual key to rotate the water injection port to perform the change.

The foregoing descriptions are exemplary implementations of the present invention. It is noted that a person of ordinary skill in the art may make some improvements and modifications without departing from the principle of the present invention and the improvements and modifications shall fall within the protection scope of the present invention.

## Claims

1. A full-function automatic water treatment control valve, comprising a valve body component, a grating assembly, a piston assembly, a driving module, and an ejector assembly, wherein the valve body component comprises a piston cavity, a water inlet, a water outlet, and a plurality of water ports are provided on side walls of the piston cavity, the water ports are communicated with the ejector assembly, the grating assembly is provided for all of the water inlet, the water outlet, and the water ports, the piston assembly is mounted in the piston cavity and is sealingly mated with the grating assembly, the driving module is connected to the piston assembly, the piston assembly comprises a main valve piston, and the main valve piston comprises an internal water hole; and
when a water treatment system needs to be turned off, the piston assembly is moved so that the main valve piston is sealingly mated with the grating assembly at the water inlet, so as to prevent raw water from entering the valve body component, and when the water treatment system is turned on and does not need to soften the water, the piston assembly is moved so that the main valve piston is located between the water inlet and the water outlet, and the water inlet is communicated with the water outlet through the internal water hole.

2. The full-function automatic water treatment control valve according to claim 1, wherein the piston cavity is divided into a main valve piston cavity and a salt valve piston cavity, the water ports comprise a water injection port, a sewage drainage port, a central port, a side wall port, an ejector water port, and a salt suction port, the water inlet, the side wall port, the sewage drainage port, the central port, and the water outlet are arranged axially in sequence in the main valve piston cavity, the ejector water port is also arranged in the main valve piston cavity at the same axial position as the water outlet, the central port, the side wall port, and an outlet of the ejector assembly are separately connected to a resin tank, the ejector water port is communicated with a nozzle of the ejector assembly, the water injection port and the salt suction port are arranged axially in sequence in the salt valve piston cavity, the water injection port is connected to a salt tank, and the salt suction port is communicated with a suction port of the ejector assembly;
the grating assembly comprises a water inlet grating located at the water inlet, a side wall port grating located at the side wall port, a sewage drainage port grating located at the sewage drainage port, a central port grating located at the central port, a water outlet grating located at the water outlet and the ejector water port, a grating adapter located between the main valve piston cavity and the salt valve piston cavity, a water injection grating located at the water injection port, and a salt suction grating located at the salt suction port; and
the main valve piston is mounted in the main valve piston cavity and is sealingly mated with the water inlet grating, the side wall port grating, the sewage drainage port grating, the central port grating, the water outlet grating, and the grating adapter, a water groove is provided on a surface of the main valve piston, a piston section I and a piston section II are formed on two sides of the water groove of the main valve piston, the driving module comprises a piston connecting rod, the piston connecting rod is connected to the piston section I of the main valve piston, the piston assembly further comprises a salt valve piston, the salt valve piston is mounted in the salt valve piston cavity and is connected to the piston section II of the main valve piston, the salt valve piston is sealingly mated with the grating adapter, the water injection grating, and the salt suction grating, a water injection groove and a salt suction groove are provided on a surface of the salt valve piston, diameters of the piston connecting rod and the salt valve piston are both less than a diameter of the main valve piston, so that a water passage I is formed between the piston connecting rod and the main valve piston cavity, and a water passage II is formed between the salt valve piston and the main valve piston cavity, and the internal water hole axially passes through the main valve piston, so as to communicate the water passage I with the water passage II.

3. The full-function automatic water treatment control valve according to claim 2, wherein when the main valve piston is located between the water inlet and the water outlet, and the water inlet is communicated with the water outlet through the internal water hole, the piston section I of the main valve piston is sealingly mated with the side wall port grating, the piston section II of the main valve piston is sealingly mated with the central port grating, and the salt valve piston is sealingly mated with the water injection grating, so as to close the sewage drainage port and the salt suction port.

4. The full-function automatic water treatment control valve according to claim 3, wherein when the water treatment system is turned on and does not need to soften the water, the piston assembly is moved so that the main valve piston is moved to be located between the water inlet and the water outlet, the water inlet is communicated with the water outlet through the water passage I, the internal water hole, and the water passage II, the piston section I of the main valve piston is sealingly mated with the side wall port grating, the piston section II of the main valve piston is sealingly mated with the central port grating, and the salt valve piston is sealingly mated with the water injection grating, so as to close the sewage drainage port and the salt suction port, and at this point, the control valve is in a bypass working position in which the raw water is directly discharged to a subsequent pipeline without being softened when passing through the control valve;
when the water treatment system needs to soften the water, the piston assembly is moved so that the central port is communicated with the water outlet through the water groove of the main valve piston, the water inlet is communicated with the side wall port through the water passage I, the piston section I of the main valve piston is sealingly mated with the sewage drainage port grating, and the piston section II of the main valve piston and a portion of the salt valve piston on a left side of the water injection groove are sealingly mated with the grating adapter, and at this point, the control valve is in a water production working position in which the raw water flows from the water inlet to the control valve, flows through the water inlet grating to a filter media tank via the side wall port, then flows through the central port to the control valve, crosses the water groove of the main valve piston, and flows out from the water outlet;
when the water treatment system needs to inject the water to the salt tank, the piston assembly is moved so that the central port is communicated with the water outlet through the water groove of the main valve piston, the water inlet is communicated with the side wall port through the water passage I, the water passage II is communicated with the water injection port through the water injection groove of the salt valve piston, the piston section I of the main valve piston is sealingly mated with the sewage drainage port grating, and a portion of the salt valve piston between the water injection groove and the salt suction groove is sealingly mated with the salt suction grating, and at this point, the control valve is in a water injection working position in which the raw water flows from the water inlet to the control valve and is divided into two parts, wherein one of the two parts has a flow path the same as that in the water production working position, and the other flows through the internal water hole of the main valve piston, the water passage II, and the water injection port to the salt tank to achieve a water injection function;
when the water treatment system needs to supplement the resin tank with saline water, the piston assembly is moved so that the side wall port is communicated with the sewage drainage port through the water groove of the main valve piston, the salt suction port is communicated with the water injection port through the salt suction groove of the salt valve piston, the water inlet is communicated with the water outlet through the water passage I, the internal water hole, and the water passage II, the piston section II of the main valve piston is sealingly mated with the central port grating, and a portion of the salt valve piston between the water injection groove and the salt suction groove is sealingly mated with the grating adapter, and at this point, the control valve is in a salt suction working position in which the raw water flows from the water inlet to the control valve, flows through the water passage I and the internal water hole of the main valve piston to the water passage II, and then is divided into two parts, wherein one of the two parts flows out from the water outlet, and the other flows through the ejector water port to the nozzle of the ejector assembly, a negative pressure is formed within the ejector assembly under the action of ejection, the saline water in the salt tank is sucked into the control valve through the water injection port under the action of the negative pressure and then flows through the salt suction port to the suction port of the ejector assembly, the saline water and the raw water are mixed within the ejector assembly and is ejected to the resin tank via the outlet of the ejector assembly, so as to achieve functional regeneration of filter media in the resin tank through the supplementation of the saline water, wherein waste water generated flows through the side wall port to the control valve, crosses the water groove of the main valve piston, and flows out from the sewage drainage port, and when the control valve is in the salt suction working position, the raw water is allowed to pass through the control valve without being softened and is allowed to be continuously supplied to a user;
when the water treatment system needs to back flush the resin tank, the piston assembly is moved so that the side wall port is communicated with the sewage drainage port through the water groove of the main valve piston, the water inlet is communicated with the water outlet through the water passage I, the internal water hole, and the water passage II, the water passage II is communicated with the central port, and a portion of the salt valve piston between the water injection groove and the salt suction groove is sealingly mated with the grating adapter, and at this point, the control valve is in a back flushing working position in which the raw water flows from the water inlet to the control valve, flows through the water passage I and the internal water hole of the main valve piston to the water passage II, and then is divided into two parts, wherein one of the two parts flows out from the water outlet, and the other flows through the central port to the resin tank and passes through the filter media from bottom to top to remove impurities accumulated in the filter media, wherein the waste water generated flows through the side wall port to the control valve, crosses the water groove of the main valve piston, and flows out from the sewage drainage port; and
when the water treatment system needs to forward flush the resin tank, the piston assembly is moved so that the sewage drainage port is communicated with the central port through the water groove of the main valve piston, the water inlet is communicated with the water outlet through the water passage I, the internal water hole, and the water passage II, the water passage I is communicated with the side wall port, and a portion of the salt valve piston between the water injection groove and the salt suction groove is sealingly mated with the grating adapter, and at this point, the control valve is in a forward flushing working position in which the raw water flows from the water inlet to the control valve and is divided into two parts at the water passage I, wherein one of the two parts flows through the internal water hole of the main valve piston and the water passage II and is discharged through the water outlet, and the other flows through the side wall port to the resin tank and passes through the filter media from top to bottom to compact the filter media, wherein the waste water generated flows through the central port to the control valve, crosses the water groove of the main valve piston, and flows out from the sewage drainage port.

5. The full-function automatic water treatment control valve according to claim 2, wherein the water inlet grating, the side wall port grating, the sewage drainage port grating, the central port grating, the water outlet grating, the grating adapter, the water injection grating, and the salt suction grating are connected as a whole.

6. The full-function automatic water treatment control valve according to claim 3, wherein seal ring slots are provided between the water inlet grating, the side wall port grating, the sewage drainage port grating, the central port grating, the water outlet grating, the grating adapter, the water injection grating, and the salt suction grating, and seal rings are disposed in the seal ring slots, so that sealed mating is formed between an outer circumference of the grating assembly and an inner wall of the piston cavity and between an inner circumference of the grating assembly and an outer circumference of the piston assembly through the seal rings.

7. The full-function automatic water treatment control valve according to claim 2, wherein a cross-sectional dimension of the water groove is greater than cross-sectional dimensions of the water injection groove and the salt suction groove.

8. The full-function automatic water treatment control valve according to claim 7, wherein a cross-sectional dimension of the salt valve piston cavity is less than that of the main valve piston cavity.

9. The full-function automatic water treatment control valve according to claim 2, wherein the main valve piston, the salt valve piston, and the piston connecting rod are threadably and detachably connected.

10. The full-function automatic water treatment control valve according to claim 2, wherein a circular cylindrical channel communicated with an inside of the salt tank is integrally connected on an outer wall of the salt tank, and the circular cylindrical channel is connected to a circular cylindrical water injection port via a circular cylindrical kit, and the kit comprises:
a kit body I, an engaging plate, a sandwich piece, a kit body II, a stop port, embedded portions, a hoop, an accommodation port, a movable plate, a stabilizing plate, a guide port, a guide plate, a movable rod, a stop plate, a common worm gear, an umbrella-shaped worm gear, a channel, a beryllium copper material plate, a stop piece, a manual key, a cylindrical member, and a disc spring, wherein the engaging plate is embedded in and assembled to an outer wall of the kit body I, the sandwich piece and the kit body II are fixedly assembled to an outer wall of the engaging plate, the stop port is formed on an outer wall of the kit body II, the guide port is formed on a wall surface of the engaging plate, the guide plate is movably assembled to an inner wall of the guide port, the movable rod is fixedly assembled to an outer wall of the guide plate, the channel is formed on an inner wall of the sandwich piece, the cylindrical member is embedded in and assembled to an inner wall of the channel through transition fit, the stop piece is sleeved on and assembled to an outer wall of the cylindrical member, the embedded portions are embedded in and assembled to an inner wall of the kit body II, the hoop is fixedly assembled to outer walls of the embedded portions, the manual key and the beryllium copper material plate are fixedly assembled to two ends of an outer wall of the stop piece respectively, and the disc spring is fixedly connected to one end of the outer wall of the stop piece; and
the kit body II and the embedded portions form an embedded structure, the embedded portions and the hoop form an embedded structure, and the embedded portions are uniformly distributed about a center of an outer wall of the hoop.
